# EUROPEAN PATENT APPLICATION

(11) **EP 3 006 251 A1**
(43) Date of publication of application: **13.04.2016**
(21) Application number: 14795171.9
(22) Date of filing: 26.03.2014
(51) Int. Cl.: B60K 28/04

(54) **VEHICLE DRIVING FORCE CONTROL UNIT, CONTROL SYSTEM AND METHOD, AND VEHICLE**

(30) Priority: 07.05.2013 CN 201310165371
(71) Applicant: Bosch Automotive Products (Suzhou) Co., Ltd., Jiangsu 215021 (CN)
(72) Inventor: ZHAN, Kang, Suzhou Jiangsu 215021 (CN)
(74) Representative: Bee, Joachim
(86) International application number: PCT/CN2014/074098
(87) International publication number: WO 2014/180193

(57) **Abstract**

A vehicle driving force control unit, control system and control method and a vehicle are disclosed. The control unit comprises an input port connected with a driving force requesting unit and a driver sensing unit, and an output port connected with a driving unit. The control unit controls the vehicle driving force based on signals from the driving force requesting unit and the driver sensing unit. When the driver is sitting on the driver seat, the driving force is controlled according to the signal from the driving force requesting unit. When the driver is not sitting on the driver seat, the vehicle is controlled to run at a speed lower than a pre-defined value, so that a certain driving force can be applied to the vehicle to assist the driver to manually push the vehicle to move, while the potential accident risk can be eliminated effectively.

## Description

### Technical Field

The invention relates to a vehicle driving force control unit, control system and control method as well as a vehicle.

### Background Art

In the condition that the power supply of an electric bicycle is turned on (or in a ready-to-run state), the bicycle can be activated by an action of rotating a handle bar. However, when the driver is not sitting on the electric bicycle or has come off from the electric bicycle and the electric bicycle is in the ready-to-run state, the electric bicycle will run if the handle bar is unintentionally rotated, which may cause a serious potential safety risk.

Other vehicles, like motorcycles or tricycles which have a driving power in the form of a gasoline engine or a diesel engine, have the same potential safety risk.

Thus, it needs to make improvements to current vehicle driving force control methods and systems.

### Summary of the Disclosure

For this end, an object of the invention is to overcome at least one of the defects found in the prior art as described above by providing an improved vehicle driving force control system which comprises a driving force requesting unit, a driver sensing unit, a driving unit, and a control unit. The control unit comprises an input port and an output port, the input port being connected with the driving force requesting unit and the driver sensing unit, and the output port being connected with the driving unit. The control unit controls the driving force based on signals from the driving force requesting unit and the driver sensing unit. If the driver is sitting on the driver seat, the control unit controls the driving force according to the requirement of the signal from the driving force requesting unit, and if the driver is not sitting on the driver seat, the control unit controls the driving force in a restricted manner so that the vehicle runs at a speed lower than a pre-defined value.

According to one aspect of the invention, a vehicle driving force control method is provided, which comprises:
receiving a driving force requesting signal; and
judging whether the driver is sitting on the driver seat, and then controlling the driving force based on the requirement of the driving force requesting signal if the result of the judging step is "YES", and controlling the driving force in a restricted manner so that the vehicle runs at a speed lower than a pre-defined value if the result of the judging step is "NO".

Optionally, the vehicle driving force control method further controls the acceleration of the vehicle to be lower than another pre-defined value.

According to the vehicle driving force control unit, control system and control method and the vehicle of the invention, the driving force is controlled based on signals from the driving force requesting unit and the driver sensing unit. When the driver is not sitting on the seat, the vehicle is controlled to run at a speed lower than a pre-defined value, so that a certain driving force can be applied to the vehicle to assist the driver to manually push the vehicle to move, while the potential accident risk can be eliminated effectively. The invention further has a control delay function which is configured that, when the driving force requesting signal and the signal indicating that the driver is not sitting on the seat have existed over a certain time period, the driving force is controlled in a restricted manner. In the condition that the driver unintentionally operates the driving force requesting unit or the driver leaves the seat temporarily due to bumping on road during the running of the vehicle, the vehicle speed is not restricted, so the safety of the vehicle is further guaranteed. The invention also controls the acceleration of the vehicle to be lower than another pre-defined value, so that not only the safety of the vehicle can be guaranteed, but also the driving comfortability can be increased.

### Brief Description of the Drawings

Figure 1 is a schematic block diagram of the structure of a vehicle driving force control system of an embodiment of the invention.
Figure 2 is a flow chart of a vehicle driving force control method of an embodiment of the invention.
Figure 3 is a flow chart of a vehicle driving force control method of another embodiment of the invention.

### Detailed Description of Preferred Embodiments

Some preferred embodiments of the vehicle driving force control system and the corresponding method according to the invention will be described below in conjunction with the drawings.

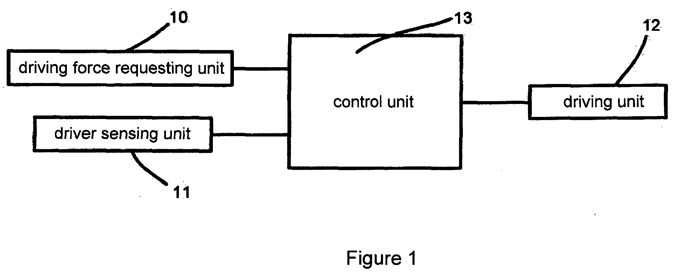

Figure 1 is a schematic diagram of the structure of a vehicle driving force control system of an embodiment of the invention. The vehicle driving force control system comprises a driving force requesting unit 10, a driver sensing unit 11, a driving unit 12 and a control unit 13. The control unit 13 comprises an input port and an output port, the input port being connected with the driving force requesting unit 10 and the driver sensing unit 11, and the output port being connected with the driving unit 12. The control unit 13 controls the output driving force of the driving unit 12 based on signals from the driving force requesting unit 10 and the driver sensing unit 11.

The driving unit 12 may be an electric motor, a gasoline engine or a diesel engine. A vehicle utilizing the vehicle driving force control system of the invention may be a bicycle or a tricycle in which an electric motor, a gasoline engine or a diesel engine acts as a power source.

Now taking an electric bicycle as an example, the driving force requesting unit 10 is a rotatable handle bar, such as a handle bar rotatable continuously or in a stepped manner. In the condition that the power source of the electric bicycle is turned on, a driving force requesting signal will be sent to the control unit 13 when the handle bar is rotated. In other embodiments, based on the type of the vehicle and various application requirements, the driving force requesting unit 10 may alternatively be a push button, a rotation knob or an accelerator pedal.

The driver sensing unit 11 is adapted for sensing whether there is a driver sitting on the driver seat. The driver sensing unit 11 may be a pressure sensor, which may be mounted in a seat cushion of the electric bicycle or under the seat cushion. The driver sensing unit may alternatively be a photosensitive sensor, an infrared sensor or an ultrasonic sensor, which may be mounted in a front portion of the vehicle, a control panel (dashboard) of the vehicle or a back portion of the vehicle. The type of the driver sensing unit 11 may be selected based on the type of the vehicle and various application requirements.

When the control unit 13 receives a driving force requesting signal, and also receives a signal indicating the driver now sits on the driver seat, the control unit 13 controls the driving unit 12 based on the requirement of the driving force requesting signal. For example, if the driving force requesting signal requires a smaller driving force, then the driving unit 12 is controlled to output a smaller driving force, and if the driving force requesting signal requires a full-power driving force, then the driving unit 12 outputs the full-power driving force.

When the control unit 13 receives a driving force requesting signal, and also receives a signal indicating the driver is not on the driver seat, the control unit 13 restricts the maximum output driving force of the driving unit 12 so that the maximum running speed of the vehicle is lower than a pre-defined value. The pre-defined value may be 0 kilometer/hour, that is, the vehicle is stopped. The pre-defined value may alternatively be a value equal to or lower than the walking speed of human, and, as an example, the pre-defined value may be any value that is lower than 5 kilometers/hour so that the vehicle runs at a lower speed. In this way, a certain driving force can be applied to the vehicle to assist the driver to manually push the vehicle to move, while the potential accident risk can be eliminated effectively.

In this embodiment, the object of controlling the driving force in a restricted manner is mainly to restrict the maximum running speed of the vehicle to be lower than the above pre-defined value. In other words, the control unit 13 restricts the maximum output driving force of the driving unit 12 only when it is sensed that the driver is not sitting on the seat and the speed of the vehicle will become higher than the pre-defined value under the driving force required by the driving force requesting signal, so that the vehicle runs at a speed in a range lower than the pre-defined value. If the vehicle will run at a speed lower than the pre-defined value under the driving force required by the driving force requesting signal, the driving force will be controlled based on the requirement of the driving force requesting signal. Optionally, controlling the driving force in a restricted manner further comprises controlling the acceleration of the vehicle to be lower than another pre-defined value, so that the safety of the vehicle can be guaranteed, and at the same time, the driving comfortability can be increased.

The control unit 13 may also provides a control delay function when it is sensed that the driver is not sitting on the driver seat, or in other words, the maximum output driving force of the driving unit 12 will be restricted only when the time period that the driver is not sitting on the seat becomes longer than a preset amount of time. The driving force of the driving unit 12 is not affected if the time period that the driver is not sitting on the seat is shorter than the preset amount of time. For example, when the vehicle is running on a bumping road section, reliable contact between the driver and the seat may disappear temporarily, and in this condition, control delay function of the control unit 13 may prevent sharp drop of vehicle speed due to abrupt restricting the output driving force of the driving unit 12, so traffic accident can be avoided. The preset amount of time may be set to be any value larger than zero according to real conditions and requirements of users, and may be set to be any value in the range of 1 to 3 seconds in the present embodiment.

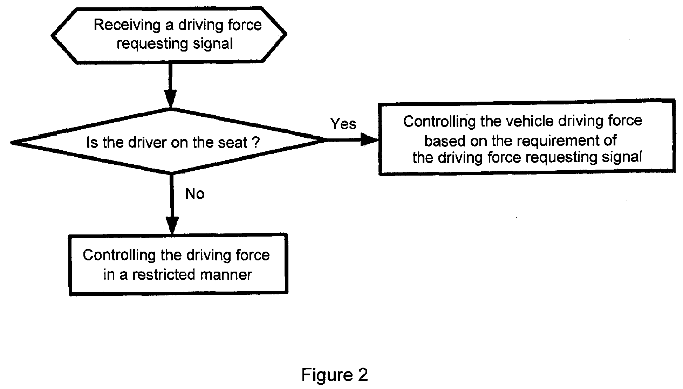

Figure 2 is a flow chart of a vehicle driving force control method of an embodiment of the invention, the vehicle driving force control method comprising:
receiving a driving force requesting signal; and
judging whether the driver is sitting on the driver seat, and then controlling the driving force based on the requirement of the driving force requesting signal if the result of the judging step is "YES", and controlling the driving force in a restricted manner so that the maximum running speed of the vehicle is lower than a pre-defined value if the result of the judging step is "NO".

Optionally, the vehicle driving force control method of an embodiment of the invention further controls the acceleration of the vehicle to be lower than another pre-defined value, so that not only the safety of the vehicle can be guaranteed, but also the driving comfortability can be increased.

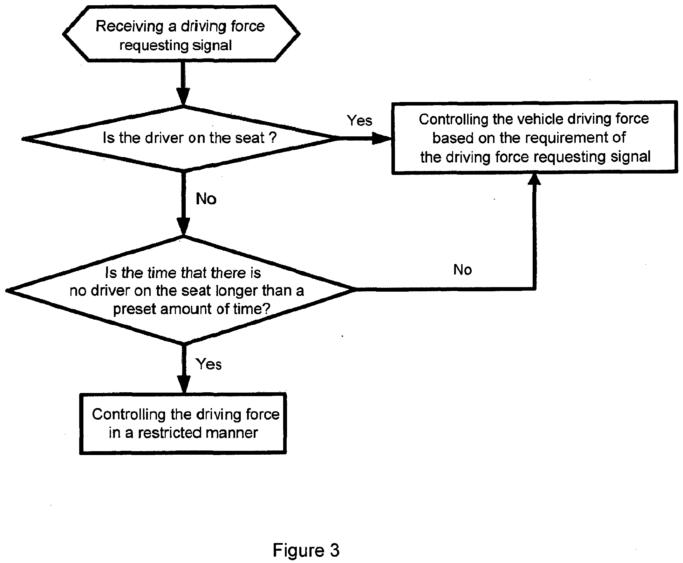

With reference to Figure 3, in a vehicle driving force control method of another embodiment of the invention, it further comprises a driving force delay control step. Specifically, in the step of judging whether the driver is sitting on the driver seat, if it is judged that the driver is not sitting on the seat, the control of the driving force is delayed. In this driving force delay control step, it judges whether the time period that there is no driver on the seat becomes longer than a preset amount of time, so that the driving force is controlled in a restricted manner if the result of this judging step is "YES", and the driving force is controlled in the previous controlling manner if the result of this judging step is "NO". Here the previous controlling manner means the manner of controlling the driving force before the state that the driver is not sitting on the seat is sensed.

According to the vehicle driving force control unit, control system and control method of the invention, the driving force is controlled based on signals from the driving force requesting unit and the driver sensing unit. When the driver is not sitting on the seat, the vehicle is controlled to run at a speed lower than a pre-defined value, so that a certain driving force can be applied to the vehicle to assist the driver to manually push the vehicle to move, while the potential accident risk can be eliminated effectively. The invention further has a control delay function, so that only when the driving force requesting signal and the signal indicating that the driver is not sitting on the seat exist over a certain time period, the driving force is controlled in a restricted manner; in the condition that the driver unintentionally operates the driving force requesting unit or the driver leaves the seat temporarily due to bumping on road during the running of the vehicle, the vehicle speed is not restricted, so the safety of the vehicle is further guaranteed. The invention also controls the acceleration of the vehicle to be lower than another pre-defined value, so that not only the safety of the vehicle can be guaranteed, but also the driving comfortability can be increased.

Although the invention has been described above with reference to some preferred embodiments, the invention is not limited to these embodiments. It is thus appreciated that those skilled in the art can make various modifications to the invention without departing from the spirit of the invention, and all these modifications and their equivalents are also covered by the scope of the invention.

## Claims

1. A vehicle driving force control system, **characterized in** comprising:
a driving force requesting unit;
a driver sensing unit;
a driving unit; and
a control unit comprising an input port and an output port, the input port being connected with the driving force requesting unit and the driver sensing unit, and the output port being connected with the driving unit;
wherein the control unit controls the driving force based on signals from the driving force requesting unit and the driver sensing unit in a way that:
the control unit controls the driving force according to the requirement of the signal from the driving force requesting unit if the driver is sitting on the driver seat, and controls the driving force in a restricted manner so that the vehicle runs at a speed lower than a pre-defined value if the driver is not sitting on the driver seat.

2. The vehicle driving force control system of claim 1, **characterized in that** the driving unit may be at least one of an electric motor, a gasoline engine or a diesel engine.

3. The vehicle driving force control system of claim 1, **characterized in that** the driving force requesting unit is a handle bar, a push button, a rotation knob or a pedal.

4. The vehicle driving force control system of claim 1, **characterized in that** the driver sensing unit is a pressure sensor, which is mounted in a seat cushion or under the seat cushion.

5. The vehicle driving force control system of claim 1, **characterized in that** the driver sensing unit is a photosensitive sensor, an infrared sensor or an ultrasonic sensor, which is mounted in a vehicle front portion, a control panel or a vehicle back portion.

6. The vehicle driving force control system of claim 1, **characterized in that** the control unit has a driving force delay control function.

7. The vehicle driving force control system of claim 1, **characterized in that** the control unit further controls the acceleration of the vehicle to be lower than another pre-defined value.

8. A vehicle driving force control method, comprising:
receiving a driving force requesting signal; and
judging whether the driver is sitting on the driver seat, and then controlling the driving force based on the requirement of the driving force requesting signal if the result of the judging step is "YES", and controlling the driving force in a restricted manner so that the vehicle runs at a speed lower than a pre-defined value if the result of the judging step is "NO".

9. The vehicle driving force control method of claim 8, **characterized in that**, in the step of judging whether the driver is sitting on the driver seat, if it is judged that the driver is not sitting on the seat, the control of the driving force is delayed, and then judging whether the time period that there is no driver on the seat is longer than a preset amount of time, so that the driving force is controlled in a restricted manner if the result of this judging step is "YES", and the driving force is controlled in the previous controlling manner if the result of this judging step is "NO".

10. The vehicle driving force control method of claim 8, **characterized in that**, in the step of controlling the driving force in a restricted manner, if the vehicle is driven at a speed lower than a pre-defined value by the required driving force corresponding to the driving force requesting signal, the driving force is controlled according to the requirement of the driving force requesting signal.

11. A control unit in which the vehicle driving force control method of claim 8, 9 or 10 is carried out.

12. A vehicle comprising a vehicle driving force control system of any one of claims 1 to 6.
